# EUROPÄISCHE PATENTANMELDUNG

(11) **EP 4 306 796 A1**
(43) Veröffentlichungstag der Anmeldung: **17.01.2024**
(21) Anmeldenummer: 22184082.0
(22) Anmeldetag: 11.07.2022
(51) Int. Cl.: F03D 1/06, F03D 7/02

(54) **VERFAHREN ZUR BEEINFLUSSUNG EINER GERÄUSCHEMISSION EINES WINDENERGIEANLAGEN-ROTORBLATTES**

(71) Anmelder: Wobben Properties GmbH, 26607 Aurich (DE)
(72) Erfinder: Länger-Möller, Annika, 26603 Aurich (DE); Hornung, Cordula, 28215 Bremen (DE); Stemberg, Jochen, 26607 Aurich (DE)
(74) Vertreter: Eisenführ Speiser

(57) **Zusammenfassung**

Es wird ein Verfahren zur Reduzierung einer Geräuschemission eines Windenergieanlagen-Rotorblattes (200) vorgesehen. Das Windenergieanlagen-Rotorblatt weist eine Vorderkante (230), eine Hinterkante (240), eine Saugseite (250), eine Druckseite (260), eine Profilsehne (201) und einen Hinterkantenkamm (300) mit einer adaptiven Geometrie an der Hinterkante (260) auf. Die Geometrie und/oder Ausrichtung des Hinterkantenkamms (300) zur Beeinflussung der Geräuschemission mittels einer Zackensteuereinheit (420) basierend auf mindestens einem Parameter (500), insbesondere einen Umweltparameter oder einen Windenergieanlagen-spezifischen Parameter, angepasst werden.

## Beschreibung

Die vorliegende Erfindung betrifft ein Verfahren zur Beeinflussung einer Geräuschemission eines Windenergieanlagen-Rotorblattes und einer Windenergieanlage.

Zur Reduzierung einer Geräuschemission eines Windenergieanlagen-Rotorblattes beim Betrieb des Rotorblattes kann ein Anbauteil wie z. B. ein Hinterkantenkamm (Serration) an einer Hinterkante eines Rotorblattes angebracht oder angeklebt werden.

Die Aufgabe der vorliegenden Erfindung besteht darin, die Geräuschemission eines Windenergieanlagen-Rotorblattes beim Betrieb weiter zu beeinflussen.

Somit wird ein Verfahren zur Beeinflussung einer Geräuschemission eines Windenergieanlagen-Rotorblattes vorgesehen. Das Windenergieanlagen-Rotorblatt weist eine Vorderkante, eine Hinterkante, eine Profilsehne und einen Hinterkantenkamm mit einer adaptiven Geometrie an der Hinterkante auf. Die Geometrie und/oder die Ausrichtung des Hinterkantenkamms wird zur Beeinflussung einer Geräuschemission des Rotorblattes mittels einer Zackensteuereinheit basierend auf mindestens einem Parameter, insbesondere ein Umweltparameter oder ein Windenergieanlagen-spezifischen angepasst. Damit kann durch Adaption des Hinterkantenkamms Einfluss auf die Aerodynamik des Rotorblattes und folglich auf die Schallerzeugung und die Leistungserzeugung genommen werden. Dies kann erfolgen ohne dabei den Pitchwinkel der Rotorblätter verändern zu müssen.

Die Beeinflussung der Geräuschsemmission kann zur Reduzierung des Lärmpegels, zur Vermeidung oder Reduzierung von unerwünschten Tonalitäten und/oder zur Leistungssteigerung bzw. Steigerung des Energieertrags dienen. Durch gezielte Steuerung des Hinterkantenkamms können unerwünschte Tonalitäten wie z. B drehzahlabhängige Tonalitäten vermieden werden. Dazu kann die Beeinflussung bzw. Steuerung des Hinterkantenkamms drehzahlabhängig erfolgen.

Durch Beeinflussung bzw. Steuerung des Hinterkantenkamms zur Reduzierung der Geräuschemission kann eine Leistungssteigerung oder Ertragssteigerung dadurch erreicht werden, dass eine Leistungsreduzierung der Windenergieanlage aufgrund einer zu hohen Lärmemission vermieden oder zumindest teilweise reduziert werden kann. Wenn die Lärmemission durch andere Maßnahmen erfolgt, dann muss es nicht zu einer Leistungsreduzierung z.B. durch eine Drehzahlreduzierung kommen.

Der Parameter (z.B. ein Umweltparameter oder ein Anlagen-spezifischer Parameter) kann eine lokale Anströmgeschwindigkeit, eine Dichte, eine Luftfeuchte, einen lokalen Anstellwinkel, einen Oberflächenzustand der Rotorblätter, das Vorhandensein von Regen, eine Windscherung, eine Drehzahl der Windenergieanlage und/oder Windgeschwindigkeit darstellen. Ferner kann der Parameter auch eine Änderungsrate der obigen Parameter (z.B. Anstellwinkel und der Anströmgeschwindigkeit, Effekt Dynamic Stall bzw. Turbulenzintensität) darstellen.

Die Zacken können jeweils eine Zackenhöhe und eine Zackenbreite aufweisen. Die Zackensteuereinheit dient dazu, die Zackenhöhen und/oder die Zackenbreiten in Abhängigkeit von dem mindestens einen Parameter zu steuern. Demnach kann die Höhe und die Breite der Zacken angepasst werden.

Die Zackensteuereinheit kann dazu ausgestaltet sein, die Zacken relativ zur Hinterkante zu verschieben, so dass die Zackenhöhe, welche über die Hinterkante hinausragen, vergrößert oder verkleinert wird.

Die Zackensteuereinheit kann dazu ausgestaltet sein, die Zacken relativ zur Hinterkante zu verschieben, so dass die Zackenbreite der Zacken, welche über die Hinterkante hinausragen, vergrößert oder verkleinert wird.

Die Zackensteuereinheit kann dazu ausgestaltet sein, die Zacken relativ zu einander zu verschieben, so dass die Zackenbreite und/oder die Zackenhöhe, welche über die Hinterkante hinausragen, vergrößert oder verkleinert wird.

Der Winkel α der Zacken (bezogen auf die Profilsehne), die Länge der Zacken, die Breite der Zacken, eine Krümmungslinie der Zacken und ein Verhältnis Breite zu Höhe können eingestellt bzw. gesteuert werden. Ferner kann eine Winkeländerung zwischen dem Hinterkantenkamm und der Profilsehne vorgenommen werden.

Die Steuerung bzw. Anpassen des Hinterkantenkamms kann drehzahlabhängig erfolgen, um eine unerwünschte Tonalität zu reduzieren oder zu vermeiden.

Die Steuerung der Zacken kann hydraulisch, pneumatisch oder elektrisch erfolgen. Alternativ dazu ist auch eine passive Einstellung möglich.

Die Erfindung betrifft ebenfalls ein Windenergieanlagen-Rotorblatt. Das Rotorblatt weist eine Vorderkante, eine Hinterkante, einen adaptiven Hinterkantenkamm mit einer Mehrzahl von Zacken an der Hinterkante und eine Zackensteuereinheit zum Steuern einer Geometrie und/oder Ausrichtung des Hinterkantenkamms in Abhängigkeit von einem Parameter, insbesondere ein Umweltparameter oder ein anlagenspezifischer Parameter, auf.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem Aspekt der vorliegenden Erfindung,
- Fig. 2A: zeigt eine schematische Schnittansicht eines Rotorblattes,
- Fig. 2B: zeigt eine schematische Draufsicht auf ein Rotorblatt,
- Fig. 3A: zeigen jeweils eine schematische Darstellung eines Hinterkanten-
- und 3B: kamms gemäß einem Aspekt der vorliegenden Erfindung,
- Fig. 4A: zeigen jeweils eine schematische Darstellung eines Hinterkanten-
- und 4B: kamms gemäß einem Aspekt der vorliegenden Erfindung, und
- Fig. 5: zeigt ein Blockdiagram einer Steuerung der Windenergieanlage.

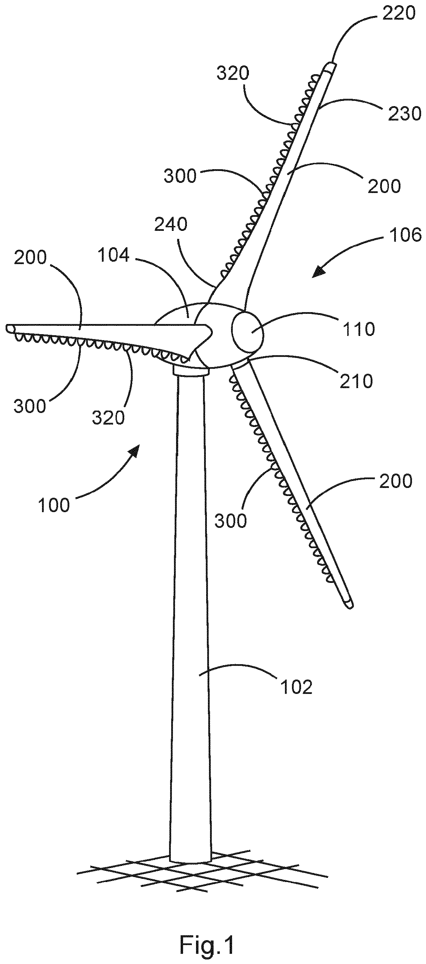

Fig. 1 zeigt eine schematische Darstellung einer Windenergieanlage gemäß einem Aspekt der vorliegenden Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln 210 der jeweiligen Rotorblätter 200 verändert werden.

Das Rotorblatt 200 weist eine Rotorblattwurzel 210, eine Rotorblattspitze 220, eine Rotorblattvorderkante 230 und eine Rotorblatthinterkante 240 auf. An der Hinterkante 240 kann zumindest teilweise ein Anbauteil 300 wie z. B. ein Hinterkantenkamm 300 mit einer Mehrzahl von Zacken 320 vorgesehen sein.

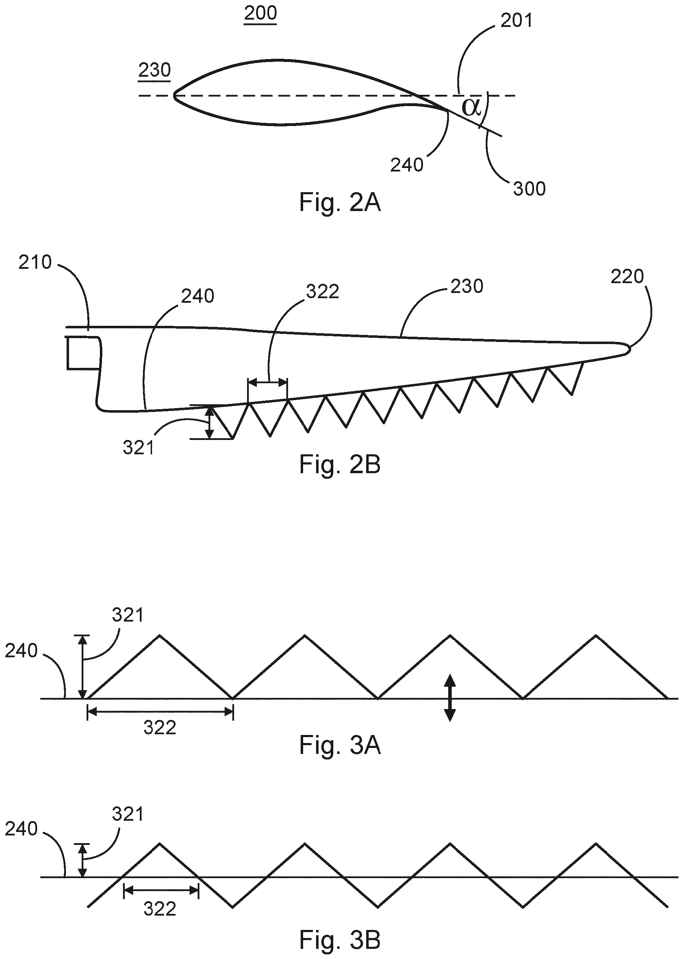

Fig. 2A zeigt eine schematische Schnittansicht eines Rotorblattes und Fig. 2B zeigt eine schematische Draufsicht auf ein Rotorblatt. Das Rotorblatt 200 weist eine Rotorblattvorderkante 230 und eine Rotorblatthinterkante 240 auf. Ferner weist das Rotorblatt eine Profilsehne 201 auf. An der Hinterkante 240 ist ein Anbauteil 300 insbesondere in Form eines Hinterkantenkamms bzw. einer Zackeneinheit vorgesehen. Zwischen der Profilsehne 201 und dem Hinterkantenkamm 300 ist ein Winkel α vorgesehen.

Der Hinterkantenkamm 320 erstreckt sich im Bereich zwischen der Rotorblattwurzel 210 und der Rotorblattspitze 200. Der Hinterkantenkamm weist eine Mehrzahl von Zacken 320 auf, welche eine Zackenhöhe 321 und eine Zackenbreite 322 aufweisen.

Fig. 3A und 3B zeigen jeweils eine schematische Darstellung eines Hinterkantenkamms gemäß einem Aspekt der vorliegenden Erfindung. In Fig. 3A ist die Hinterkante 240 des Rotorblattes 200 sowie eine Mehrzahl von Zacken 320 des Hinterkantenkamms 300 vorgesehen. Die Zacken 320 weisen jeweils eine Höhe 321 und eine Breite 322 auf. Gemäß der Erfindung kann die effektive Höhe 321 der Zacke 320 bezogen auf die Hinterkante 240 eingestellt werden. Hierbei können die Zacken 320 des Hinterkantenkamms 300 relativ zur Hinterkante 240 bewegt werden, so dass die effektive Höhe 321 und die effektive Breite 322 der Zacken 320 vergrößert oder verkleinert werden kann. Durch Einziehen der Zacken 320 wird sowohl die effektive Höhe 321 als auch die effektive Breite 322 der Zacken 320 reduziert. Durch ein Wiederausfahren kann die Höhe und die Breite der Zacke wieder erhöht werden. Somit kann die effektive Form bzw. die effektive aerodynamische Form der Zacken durch Ein- oder Ausfahren der Zacken beeinflusst werden.

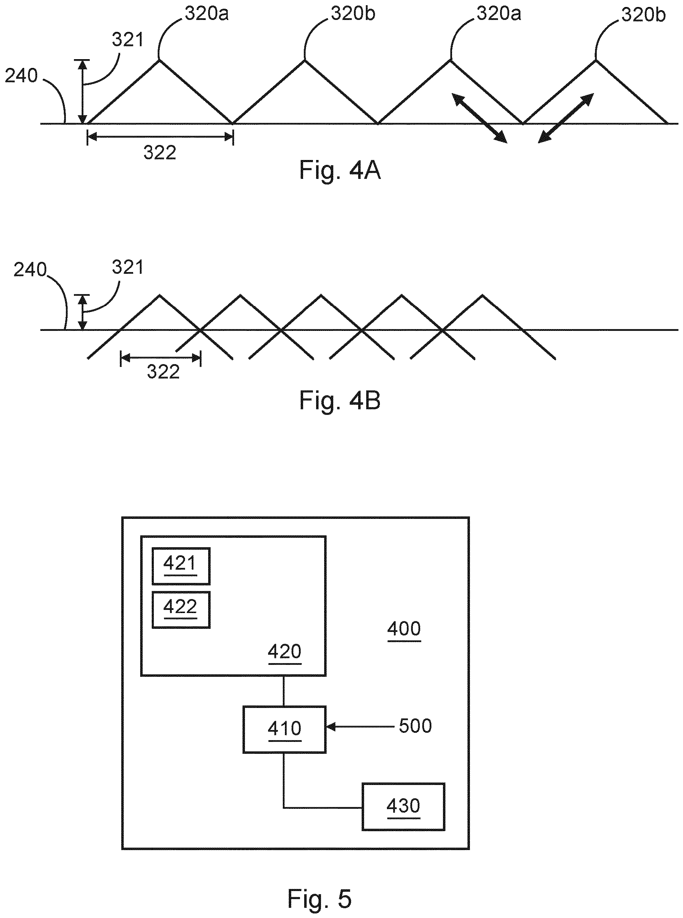

Fig. 4A und 4B zeigen jeweils eine schematische Darstellung eines Hinterkantenkamms gemäß einem Aspekt der vorliegenden Erfindung. In Fig. 4A ist eine Mehrzahl von ersten Zacken 320a und eine Mehrzahl von zweiten Zacken 320b gezeigt. Hierbei können die ersten Zacken 320a gegenüber den zweiten Zacken 320b oder umgekehrt verschoben werden. Dies führt dazu, dass sowohl die effektive Höhe 321 als auch die effektive Breite 322 der Zacken 320a, 320b sowie der Abstand zwischen benachbarten Zacken 320a, 320b veränderbar ist.

Fig. 5 zeigt ein Blockdiagram einer Steuerung der Windenergieanlage. Eine Steuerung 400 der Windenergieanlage kann eine Steuereinheit 410, eine Zackensteuereinheit 420 und optional eine Pitchwinkelsteuereinheit 430 aufweisen. Die Steuereinheit 410 kann Parameter 500 als Eingangssignale empfangen. Die Zackensteuereinheit 420 kann mit den Zacken 320 beispielsweise gemäß Fig. 3A, 3B oder Fig. 4A und 4B gekoppelt sein, um die Zackenhöhe 321 und/oder Zackenbreite 322 beeinflussen zu können. Alternativ dazu kann die Zackensteuereinheit 420 auch die Form der Zacken 320 ändern. Die Zackensteuereinheit 420 ist dazu in der Lage, die Zacken 320 in Bezug auf die Hinterkante oder in Bezug aufeinander zu verschieben. Dies kann anhand der empfangenen Parameter 500 erfolgen.

Die Zackensteuereinheit 420 kann eine Zackengeometriesteuereinheit 421 und/oder eine Zackenausrichtungssteuereinheit 422 aufweisen. Mittels der Zackengeometriesteuereinheit 421 kann beispielsweise wie in Fig. 3A und 3B gezeigt die effektive Geometrie der Zacken 320 gesteuert werden.

Die Zackenausrichtungssteuereinheit 422 kann dazu dienen, den Winkel α der Zackeneinheit bezogen auf die Profilsehne 201 zu verändern.

Die Zackensteuereinheit 420 dient dazu, die Geometrie und/oder eine Ausrichtung der Zacken 320 des Hinterkantenkamms 300 zu steuern. Die Steuerung kann basierend auf den Parametern 500 erfolgen. Die Parameter 500 können eine lokale Anströmgeschwindigkeit, eine Luftdichte, eine Feuchte/Viskosität, einen lokalen Anstellwinkel (abhängig von der jeweiligen Betriebsführung), einen Oberflächenzustand (Rauigkeit, Verschmutzung, Erosion etc.), Regen und Scherung/Drehzahl der Windenergieanlage und/oder Windgeschwindigkeit darstellen.

Die Parameter 500 können ebenfalls Grenzschichteigenschaften in der Profilsektion wie beispielsweise eine Wanddruckfluktuation (WPF Sensoren), Grenzschichtdicke und/oder ein Grenzschichtprofil darstellen.

Die Zackensteuereinheit 420 ist dazu in der Lage, den Winkel α der Zacken 320, die Länge 321 der Zacken 320, die Breite 322 der Zacken 320, eine Krümmungslinie der Zacken und ein Verhältnis Breite zu Höhe einzustellen bzw. zu steuern.

Die Steuerung der Zacken 320 kann hydraulisch, pneumatisch oder elektrisch erfolgen. Alternativ dazu ist auch eine passive Einstellung möglich.

Optional kann der Hinterkantenkamm 300 und insbesondere die Zacken 320 des Hinterkantenkamms 300 aufblasbar ausgestaltet sein. Mit der Zackensteuereinheit 420 kann dann der Druck innerhalb der aufblasbaren Zacken gesteuert werden. Somit kann die Geometrie / Form der Zacken gesteuert werden.

Optional kann die Zackensteuereinheit 420 die Geometrie und/oder die Ausrichtung der Zacken 320 des Hinterkantenkamms 300 in Abhängigkeit der Luftdichte (als ein Parameter 500) steuern. Die Luftdichte beeinflusst einen Strömungszustand an den Blättern 200. Ohne die adaptiven Zacken 320 des Hinterkantenkamms 300 kann eine Anpassung des Betriebs der Windenergieanlage an die Luftdichte lediglich durch Einstellung des Pitchwinkels erfolgen. Dies kann jedoch zu einer Reduzierung der Leistung führen. Bei einer niedrigen Luftdichte kann es bei hohen Anströmwinkeln dazu kommen, dass der Hinterkantenkamm 300 außerhalb seines Betriebsbereiches betrieben werden muss. Dies kann dazu führen, dass der durch die Rotorblätter 200 erzeugte Schall ebenfalls erhöht wird. Da auch die Schallerzeugung der Windenergieanlage abhängig von der Luftdichte ist, kann jedoch mit dem adaptiven Hinterkantenkamm eine geringere Schallemission erreicht werden, auch bei einer geringen Luftdichte.

Die Zackensteuereinheit 420 kann die Geometrie/Form und/oder Ausrichtung der Zacken 320 des Hinterkantenkamms 300 in Abhängigkeit einer Turbulenzintensität oder einer Änderung der Turbulenzintensität (Parameter 500) steuern. Entsprechend der Turbulenzintensität können unterschiedliche Anströmbedingungen mit variablen Änderungsraten der Anstellwinkel und Strömungsgeschwindigkeiten vorgesehen sein. Diese können durch die adaptiven Zacken 320 des Hinterkantenkamms 300 zumindest teilweise ausgeglichen werden.

Optional kann die Zackensteuereinheit 420 die Steuerung der Geometrie und/oder Ausrichtung der Zacken jahreszeitenabhängig durchführen. Die Geometrie und/oder Ausrichtung der Zacken des Hinterkantenkamms können somit in Abhängigkeit der Jahreszeiten variiert werden. Beispielsweise kann die Höhe der Zacken des Hinterkantenkamms im Sommer größer sein als im Winter, beispielsweise um eine Verschmutzung der Blätter im Sommer auszugleichen.

Optional kann die Zackensteuereinheit 420 die Geometrie und/oder Ausrichtung der Zacken des Hinterkantenkamms in Abhängigkeit des Vorhandenseins von Regen oder Feuchtigkeit auf dem Rotorblatt steuern.

Ferner kann die Zackensteuereinheit 420 den Zustand des Rotorblattes (beispielsweise aufgrund der Alterung) bei der Steuerung der Zacken des Hinterkantenkamms berücksichtigen. Somit kann eine Änderung der Blattgeometrie beispielsweise durch Erosion, Blitzschlag etc. ausgeglichen werden. Insbesondere kann eine Oberflächenrauigkeit der Oberfläche des Rotorblattes bzw. eine Veränderung dieser Oberflächenrauigkeit durch Steuerung der Zacken des Hinterkantenkamms beeinflusst werden. Damit kann eine hieraus resultierende Erhöhung des Schalls reduziert werden.

Die Zackensteuereinheit 420 ist ebenfalls dazu in der Lage, Fertigungstoleranzen der Rotorblätter durch eine anlagenspezifische Regelung auszugleichen.

Optional kann die Zackensteuereinheit 420 die Geometrie und/oder die Ausrichtung des Hinterkantenkamms 300 in Abhängigkeit des durch die Windenergieanlage erzeugten Schalls steuern. Der erzeugte Schall kann dann als Parameter 500 dienen. Hierbei kann die Zackensteuereinheit 420 beispielsweise nur dann aktiviert werden, wenn der durch die Windenergieanlage, insbesondere durch die Rotorblätter 200 der Windenergieanlage, erzeugte Schall einen Grenzwert überschreitet. In diesem Fall kann die Zackensteuereinheit 420 die Geometrie und/oder Ausrichtung der Zacken 320 des Hinterkantenkamms 300 steuern, um den von der Windenergieanlage erzeugten Schall zu reduzieren. Dies ist vorteilhaft, weil damit ein Betrieb der Windenergieanlage weiterhin und ggf. mit einer höheren Leistung als ohne das Eingreifen der Zackensteuereinheit ermöglicht wird.

Dies kann insbesondere dann vorteilhaft sein, wenn die Windenergieanlage in einem Drehzahlbereich eine zu hohe tonale Schall-Abstrahlung aufweist. Wenn diese Tonalität größer als der aeroakustische Lärm der Windenergieanlage ist, dann kann es zu Tonzuschlägen kommen, d. h. die Windenergieanlage ist lauter als in einem anderen Drehzahlbereich. Mittels der adaptiven Zacken 320 des Hinterkantenkamms 300 kann der Pegel und die zentrale Verteilung des elektroakustischen Lärms für ausgewählte Betriebsbereiche (Drehzahlbereiche) angepasst werden, um den gesamten durch die Windenergieanlage erzeugten Lärm bzw. Schall zu reduzieren. Damit können sektorabhängige Tonalitäten reduziert bzw. verdeckt werden.

Mit entsprechender Steuerung der Zackensteuereinheit 420 können Fertigungstoleranzen in den elektrischen Komponenten (auch Struktur) der Windenergieanlage (elektrischer Triebstrang) ausgeglichen werden.

Mit der Zackensteuereinheit 420 gemäß einem Aspekt der vorliegenden Erfindung kann eine Abhängigkeit der Drehzahl und der Nennleistung auf den von der Windenergieanlage abgegebenen Schall reduziert werden. Dies kann zur Steigerung der durch die Windenergieanlage abgegebenen Leistung führen, weil beispielsweise ein leistungsreduzierter Betrieb beispielsweise während der Nacht nicht mehr notwendig ist, da der durch die Windenergieanlage abgegebene Schall reduziert werden kann. Durch eine entsprechende Steuerung der Zacken des Hinterkantenkamms auf bestimmte Betriebspunkte kann die Leistung der Windenergieanlage bei gleicher Schallemission gesteigert werden.

Die Zackensteuereinheit 420 ist ebenfalls dazu in der Lage, eine zyklische Steuerung der Zacken der Rotorblätter, insbesondere zyklisch beim Umlauf der Rotorblätter, durchzuführen. Hierbei kann beispielsweise ein Einfluss einer Windscherung auf die Rotorblätter zumindest teilweise ausgeglichen werden. Eine Schallemission des Rotorblattes kann im oberen Bereich größer sein als im unteren Bereich. Gemäß der Erfindung kann die Zackensteuereinheit eine Amplitudenmodulation des durch die Windenergieanlage abgegebenen Schalls erheblich reduzieren. Insbesondere ist eine zyklische Änderung bzw. Steuerung der Zacken des Hinterkantenkamms möglich. Damit kann die Geometrie und/oder Ausrichtung der Zacken des Hinterkantenkamms während der Rotation der Rotorblätter gesteuert werden.

Die Zackensteuereinheit 420 ist ebenfalls dazu in der Lage, die Geometrie und/oder Ausrichtung der Zacken des Hinterkantenkamms für beliebige Betriebsmodi einzustellen. Insbesondere können diese Betriebsmodi eine geringe Drehzahl aufweisen (schallreduzierte oder lastreduzierte Modi). Bei diesen Modi wird die maximale Drehzahl früh erreicht und die Rotorblattspitze arbeitet nicht am Anstellwinkel von 0°, sondern darunter. Eine Anpassung der Winkel der Zacken kann durch die Zackensteuereinheit 420 erfolgen. Mittels der adaptiven Zacken 320 des Hinterkantenkamms 300 können die Strömungseigenschaften in diesen Modi akustisch beeinflusst werden bzw. ein störender Schall kann vermieden werden. Alternativ dazu können die Zacken 320 des Hinterkantenkamms 300 so eingestellt werden, dass die Schallquellen der Windenergieanlage reduziert werden. Insbesondere kann die Steuerung so erfolgen, dass die Strömung nicht beeinflusst wird.

Optional kann eine gezielte Entlastung der Grenzschicht bei sehr hohen Windgeschwindigkeiten durch Steuerung der Zacken des Hinterkantenkamms erfolgen, so dass eine Strömungsablösung im Bereich des negativen Stalls vermieden werden kann.

Optional kann die Zackensteuereinheit so gesteuert werden, dass der maximale Schallpegel der Windenergieanlage am Emissionspunkt einen Grenzwert nicht überschreitet. Dies kann durch Einstellung der Länge bzw. Einstellung der Ausrichtung der Zacken des Hinterkantenkamms erreicht werden.

Gemäß einem weiteren Aspekt der vorliegenden Erfindung kann eine Differenz des durch die Windenergieanlage erzeugten Lärms zu Umgebungsgeräuschen am Emissionspunkt berücksichtigt werden. Ein Winkel des Hinterkantenkamms und die Länge der Zacken kann für einen Teillastbereich bei einer Windgeschwindigkeit auf Nabenhöhe von 5 bis 7 m/s optimiert werden. Ferner kann ein länderspezifischer Betriebsmodus durch Einstellen der Zacken auf die vorliegende Drehzahl optimiert werden.

### Bezuqszeichenliste

- 100: Windenergieanlage
- 102: Turm
- 104: Gondel
- 106: aerodynamischer Rotor
- 110: Spinner
- 200: Rotorblätter
- 201: Profilsehne
- 210: Rotorblattwurzel
- 220: Rotorblattspitze
- 230: Rotorblattvorderkante
- 240: Rotorblatthinterkante
- 250: Saugseite
- 260: Druckseite
- 300: Hinterkantenkamm
- 320: Zacken
- 320a: erste Zacken
- 320b: zweite Zacken
- 321: Zackenhöhe
- 322: Zackenbreite
- 400: Steuerung
- 410: Steuereinheit
- 420: Zackensteuereinheit
- 421: Zackengeometriesteuereinheit
- 422: Zackenausrichtungssteuereinheit
- 430: Pitchwinkelsteuereinheit
- 500: Parameter

## Patentansprüche

1. Verfahren zur Beeinflussung einer Geräuschemission eines Windenergieanlagen-Rotorblattes (200), wobei das Windenergieanlagen-Rotorblatt eine Vorderkante (230), eine Hinterkante (240), eine Saugseite (250), eine Druckseite (260), eine Profilsehne (201) und einen Hinterkantenkamm (300) mit einer adaptiven Geometrie an der Hinterkante (260) aufweist, mit dem Schritt:
Anpassen der Geometrie und/oder Ausrichtung des Hinterkantenkamms (300) zur Beeinflussung einer Geräuschemission mittels einer Zackensteuereinheit (420) basierend auf mindestens einem Parameter (500), insbesondere einem Umweltparameter oder einem Windenergieanlagen-spezifischen Parameter.

2. Verfahren nach Anspruch 1, wobei
der mindestens eine Parameter (500) eine lokale Anströmgeschwindigkeit, eine Luftdichte, eine Luftfeuchte, einen lokalen Anstellwinkel, einen Oberflächenzustand der Rotorblätter, das Vorhandensein von Regen, eine Windscherung, eine Drehzahl der Windenergieanlage und/oder Windgeschwindigkeit darstellt.

3. Verfahren nach Anspruch 2, wobei
der mindestens eine Parameter (500) eine Änderungsrate einer lokalen Anströmgeschwindigkeit, einer Luftdichte, einer Luftfeuchte, eines lokalen Anstellwinkels, eines Oberflächenzustandes der Rotorblätter, einer Windscherung, einer Drehzahl der Windenergieanlage und/oder einer Windgeschwindigkeit darstellt.

4. Verfahren nach einem der Ansprüche 1 bis 3, wobei
die Zacken (320) jeweils eine Zackenhöhe (321) und eine Zackenbreite (322) aufweisen,
wobei die Zackensteuereinheit (420) dazu ausgestaltet ist, die Zackenhöhen (321) und/oder die Zackenbreiten (322) in Abhängigkeit von dem mindestens einen Parameter (500) zu steuern.

5. Verfahren nach Anspruch 4, wobei
die Zackensteuereinheit (420) dazu ausgestaltet ist, die Zacken (320) relativ zur Hinterkante (240) zu verschieben, so dass die Zackenhöhe (321), welche über die Hinterkante (320) hinausragt, vergrößert oder verkleinert wird.

6. Verfahren nach einem der Ansprüche 4 oder 5, wobei
die Zackensteuereinheit (420) dazu ausgestaltet ist, die Zacken (320) relativ zur Hinterkante zu verschieben, so dass die Zackenbreite (321) der Zacken (320), welche über die Hinterkante (320) hinausragen, vergrößert oder verkleinert wird.

7. Verfahren nach einem der Ansprüche 1 bis 6, wobei
die Zackensteuereinheit (420) dazu ausgestaltet ist, die Zacken (320) relativ zu einander zu verschieben, so dass die Zackenbreite (321) und/oder die Zackenhöhe (322), welche über die Hinterkante (320) hinausragen, vergrößert oder verkleinert wird.

8. Verfahren nach einem der Ansprüche 1 bis 7, wobei
die Zackensteuereinheit (420) dazu ausgestaltet ist, die Zacken (320) relativ zur Profilsehne (201) des Rotorblattes (200) zu drehen, und damit einen Einbauwinkel zu verändern.

9. Windenergieanlagen-Rotorblatt (200), mit
einer Vorderkante (230),
einer Hinterkante (240),
einer Saugseite (250),
einer Druckseite (260),
einem adaptiven Hinterkantenkamm (300) mit einer Mehrzahl von Zacken (320) an der Hinterkante (260), und
einer Zackensteuereinheit (420) zum Steuern einer Geometrie und/oder Ausrichtung des Hinterkantenkamms (300) basierend auf mindestens einen Parameter, insbesondere einem Umweltparameter oder einem Windenergieanlagen-spezifischer Parameter.
